# EUROPEAN PATENT SPECIFICATION

(11) **EP 1 644 618 B1**
(45) Date of publication and mention of the grant of the patent: **24.02.2010**
(21) Application number: 04736890.7
(22) Date of filing: 15.06.2004
(51) Int. Cl.: F01N 1/12

(54) **HOUSING TO BE ARRANGED IN AN EXHAUST SYSTEM OF A COMBUSTION ENGINE**
IN EINEM ABGASSYSTEM EINER BRENNKRAFTMASCHINE ANZUORDNENDES GEHÄUSE
BOITIER DESTINE A ETRE MONTE DANS UN SYSTEME D'ECHAPPEMENT D'UN MOTEUR A COMBUSTION

(30) Priority: 26.06.2003 SE 0301875
(43) Date of publication of application: 12.04.2006
(73) Proprietor: Scania CV AB (publ), 151 87 Södertälje (SE)
(72) Inventor: LINDEN, Michael, S-152 57 Södertälje (SE); WÄHLIN, Mattias, S-393 55 Kalmar (SE)
(86) International application number: PCT/SE2004/000944
(87) International publication number: WO 2004/113690

(56) References cited:
- EP-A2- 1 158 144
- WO-A1-01/04466
- WO-A1-03/025357
- DE-A1- 19 955 013
- SE-C2- 520 350

## Description

### BACKGROUND TO THE INVENTION, AND STATE OF THE ART

The invention relates to a converter device adapted to being arranged in an exhaust system for a combustion engine, according to claim 1, first part (compare with WO-A-03 025 357).

Ever higher requirements are being set regarding the release of emissions from diesel-powered vehicles. To be able to meet these emission requirements, exhaust systems of vehicles powered by diesel engines are being equipped with a catalytic cleaner which inter alia reduces the amount of nitrogen oxides, and with a particle filter which reduces the amount of soot particles, in the exhaust gases. Such exhaust cleaning components do to a great extent act like a low-pass filter. This means that low-frequency noise, which is the predominant portion of exhaust noise, passes almost undamped through the exhaust cleaning components. It is therefore necessary to add to the exhaust system a further sonic damping volume to compensate for the volume occupied by the particle filter and the catalytic cleaner in the exhaust system. Such a converter device thus becomes relatively elongate and may therefore occupy a large amount of space in the vehicle.

### SUMMARY OF THE INVENTION

The object of the present invention is to provide a converter device which has good sonic damping properties, particularly with regard to low-frequency noise in an exhaust system for a combustion engine, while at the same time being attractive from the point of view of space occupied, flexibility and being easy to service.

The object stated above is achieved with the device mentioned in the introduction which is characterised by what is indicated in the characterising part of claim 1. Achieving good sonic damping of low-frequency engine noise from a combustion engine usually requires an elongate passage which leads exhaust gases through the converter device. As the passage according to the present invention comprises a first portion external about the tubular body and a second portion internal about the tubular body, the result is a substantially two-way flow of exhaust gases in the converter device. Such a two-way flow constitutes in itself a relatively long passage for the exhaust gases through the converter device and provides relatively good sonic damping of low-frequency noise. Such a passage without sharp bends results in a flow in the converter device involving relatively little flow resistance. The flow resistance here concerned need not be substantially greater than in the case of a conventional converter device with a relatively straight passage for exhaust gases flowing through it. The combination of an axial exhaust duct which provides a lengthened flow route for exhaust gases externally about the tubular body and a radial exhaust duct which provides a lengthened flow route for exhaust gases in a radial direction in the converter device results in substantially optimum lengthening of the passage without having to increase the length of the converter device. The converter device according to the present invention may therefore form a short and compact structure while at the same time providing a very long passage for exhaust gases. The result is a converter device with a shape which is attractive from the point of view of space occupied while at the same time providing very good damping of low-frequency engine noise.

According to a preferred embodiment of the present invention, the combined axial exhaust duct and the radial exhaust duct are situated so that they connect a first space and a second space of the passage. A basic principle for damping low-frequency noise is the creation of a long exhaust line between two relatively large spaces. An effective low-frequency noise damper with a conventional straight exhaust duct for exhaust gases between two such spaces is of considerable length and therefore occupies a large amount of space. In contrast, such a combined axial exhaust duct and a radial exhaust duct result in an elongate passage between two such spaces. The converter device may thus form a short and compact structure while at the same time having very good sonic damping properties.

According to another preferred embodiment of the invention, the axial exhaust duct has a helical extent and the radial exhaust duct a spiral extent. Such exhaust ducts result in considerable lengthening of the flow route of the exhaust gases as compared with a substantially rectilinear flowline. The combination of a helical exhaust duct and a spiral exhaust duct enables the converter device to be made very short and compact despite comprising a passage of significant length for exhaust gases. Both a helical axial exhaust duct and a spiral radial exhaust duct impart to the exhaust flow substantially optimum gentle changes of direction. The flow losses in the passage through the converter device can thus be kept down to a low level.

According to another preferred embodiment of the present invention, the axial exhaust duct and/or the radial exhaust duct turn through an angle ranging from 180° to 1080°. A helical axial exhaust duct need only extend one turn round the tubular body for it to be of significant length. In a corresponding manner, the spiral radial exhaust duct will be of significant length by turning through a relatively small angle. With advantage, the axial exhaust duct and/or the radial exhaust duct may comprise at least one section with a varying cross-sectional area. Varying the cross-sectional area of the exhaust ducts makes it possible to control the exhaust noise damping and the flow resistance. The cross-sectional area may for example be so designed that it increases in the direction of flow of the exhaust gases. A cross-sectional area which increases in the direction of flow reduces the velocity of the exhaust gases. The flow resistance through the exhaust duct will thus be low.

According to another preferred embodiment of the present invention, the axial exhaust duct and/or the radial exhaust duct comprise/comprises at least one elongate profile element. The length of such a profile element may substantially correspond to that of the exhaust duct. The profile element will thus constitute a wall surface of the exhaust duct. The axial exhaust duct and/or the radial exhaust duct may comprise *n* parallel exhaust ducts comprising *n* profiles offset by 360°/*n* from one another. With advantage, at least two parallel exhaust ducts are used to make it easier for the exhaust gases to pass through. The two exhaust ducts preferably have their respective inlets and outlets offset 180° from one another. The result is substantially even distribution of exhaust gases between the two parallel exhaust ducts. The distribution of the exhaust gases may be further facilitated by further increasing the number of parallel exhaust ducts. If three or more such parallel-flow exhaust ducts are used, it is advantageous that their inlets and outlets be offset from one another according to the above formula in order to distribute the exhaust gases evenly between the parallel exhaust ducts.

According to another preferred embodiment of the present invention, the exhaust gases are caused to be led through the passage in a direction such that they first flow through the first portion situated radially externally to the pipe before they flow through the second portion situated internally to the pipe. Such a direction of flow of the exhaust gases through the passage has a number of advantages. Inter alia, it makes the constituent parts of the converter device relatively easy to assemble, it facilitates the design of the axial exhaust duct and the radial exhaust duct so as to provide effective sonic damping and it simplifies the possible arranging of a burner at the passage inlet. Such a burner is intended, if necessary, to raise the temperature of exhaust gases before they reach the particle filter. The exhaust gases need to have reached a specific temperature if the soot particles contained in them are to ignite and burn in the particle filter.

According to another preferred embodiment of the present invention, the axial exhaust duct and the radial exhaust duct are comprised within a detachable module. Such a module makes it easy to fit/remove the exhaust ducts in/from the converter device. With advantage, such modules may be manufactured in various versions and sizes. Thus modules which comprise exhaust ducts of different lengths and dimensions can be adapted to combustion engines of different types and sizes. Said detachable module preferably comprises an endwall of the casing. Such a module constitutes substantially a side cover which is very easy to fit and remove.

### BRIEF DESCRIPTION OF THE DRAWINGS

A preferred embodiment of the invention is described below by way of example with reference to the attached drawings, in which:
- Fig. 1: depicts a converter device according to the present invention,

- Fig. 2: depicts a section through the converter device in the plane A-A in Fig. 1,
- Fig. 3: depicts a section through the converter device in the plane B-B in Fig. 1 and
- Fig. 4: depicts a section through the converter device in the plane C-C in Fig 1

### DETAILED DESCRIPTION OF A PREFERRED EMBODIMENT OF THE INVENTION

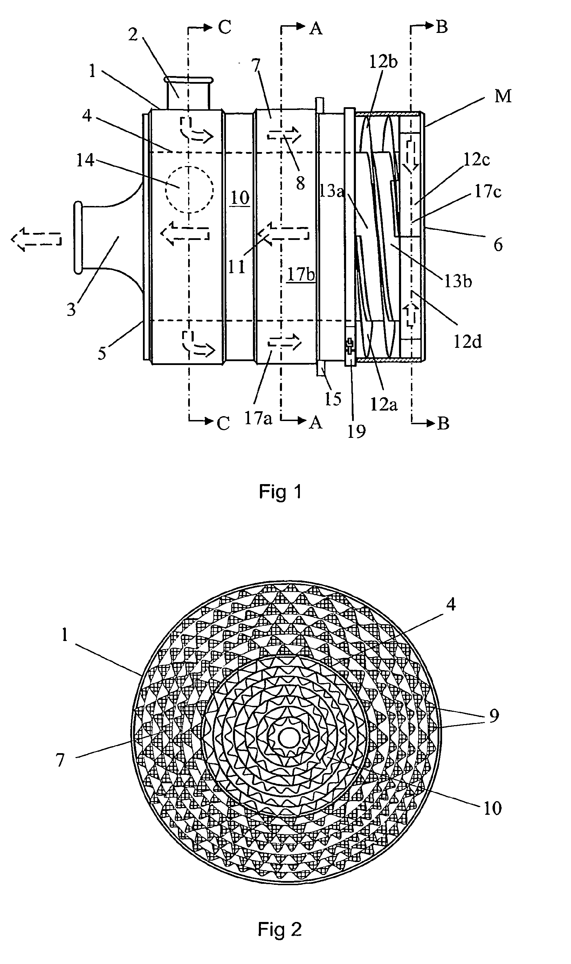

Fig. 1 depicts a converter device intended to be arranged in an exhaust system for a diesel-powered vehicle. The converter device comprises an external casing 1 which is substantially cylindrical in shape. The casing 1 constitutes a closed external surface except at the points where an inlet 2 and an outlet 3 are arranged for exhaust gases. A pipe 4 of circular cross-section is arranged inside the casing 1 in such a way that centrelines through the casing 1 and the pipe 4 coincide. The length of the pipe 4 is such that it extends from a first endwall 5 to a module M which comprises a second endwall 6 of the casing 1.

The converter device comprises exhaust cleaning components for cleaning exhaust gases which flow through a passage which has an extent between the inlet 2 and the outlet 3. A first exhaust cleaning component in the form of a particle filter 7 is arranged externally about the pipe 4. Fig. 2 depicts a section in the plane A-A through the particle filter 7. The particle filter 7 has an annular extent round the pipe 4. The particle filter 7 has a radial extent such that it completely fills the radial space between the pipe 4 and the casing 1. The particle filter 7 comprises elongate ducts adapted to leading exhaust gases through the particle filter in substantially a first direction 8. The particle filter 7 has a constant cross-sectional shape in the direct of flow of the exhaust gases. The particle filter 7 comprises stop surfaces 9 arranged at suitable points along the extent of the elongate ducts. The stop surfaces 9 cause the exhaust gases to be led into adjacent elongate ducts 9 in the particle filter. Soot particles in the exhaust gases are here intended to be caught and burned in the particle filter 7. A second exhaust cleaning component in the form of a catalytic cleaner 10 is arranged inside the pipe 4. The catalytic cleaner 10 is arranged radially within the particle filter 7. The catalytic cleaner 10 also comprises elongate ducts adapted to leading the exhaust gases in substantially a second direction 11 through the catalytic cleaner 10. The catalytic cleaner 10 has a constant cross-sectional shape in the direction of flow 11 of the exhaust gases. The catalytic cleaner 10 is adapted to effecting catalytic cleaning of the exhaust gases, particularly in order to reduce the nitrogen oxides content of the exhaust gases as they pass through. The particle filter 7 has a larger cross-sectional surface than the catalytic cleaner 10 in the plane A which is depicted in Fig. 2. The result is that the exhaust gases have a lower velocity through the particle filter 7 than through the catalytic cleaner 10. The flow resistance to the exhaust gases is related to the flow velocity. Owing to the stop surfaces 9, the flow resistance to the exhaust gases is normally greater in the particle filter 7 than in the catalytic cleaner 10. The total flow resistance through the passage can be considerably reduced by lowering the flow velocity through the particle filter 7. The cross-sectional area of the particle filter 7 is preferably about twice as great as that of the catalytic cleaner 10.

A basic principle for damping low-frequency noise is the creation of a long exhaust line between two spaces. An effective low-frequency noise damper involving such an exhaust line which is straight occupies a great deal of space. Low-frequency noise is the predominant portion of the noise generated by a combustion engine. The converter device is constructed according to this basic principle. In order to provide lengthening of the exhaust passage, the converter device comprises two axial exhaust ducts 13a, b which extend helically round the pipe 4. The axial exhaust ducts 13a, b are formed of two profiles 12a, b which extend helically round the pipe 4 and have a radial extent such that they fill the radial space between the pipe 4 and the casing 1. In this case each of the profiles 12a, b extends about one turn, i.e. 360°, round the pipe 4. The two profiles 12a, b form between them the two parallel helical exhaust ducts 13a, b, the respective inlets and outlets of which are offset 180° from one another. The exhaust gases led through said helical exhaust ducts 13a, b travel a considerably longer distance than they would in a rectilinear axial flow external to the pipe 4. The space in the passage upstream from the helical exhaust ducts 13a, b constitutes a first space.

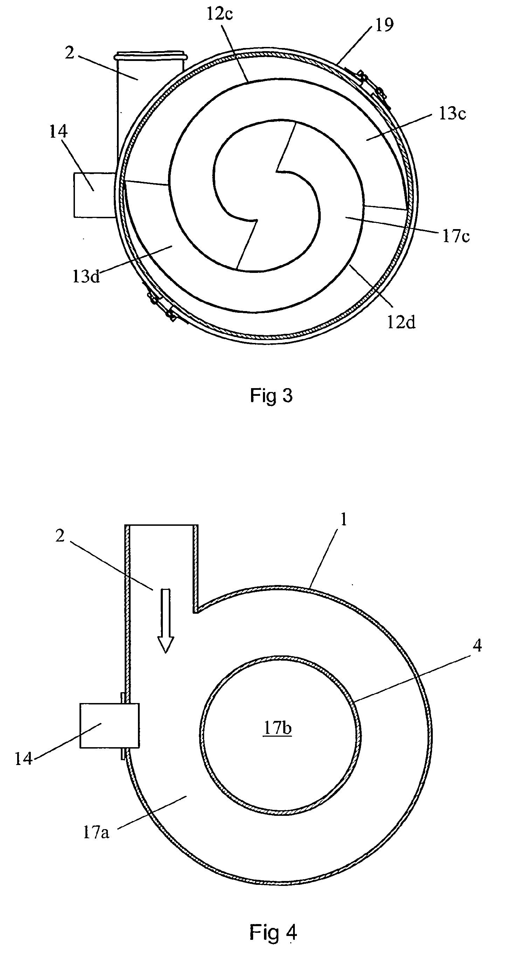

To further lengthen the exhaust line, the converter device comprises two radial exhaust ducts 13c, d (see Fig. 3, which depicts a section through the converter device in a plane B). The two radial exhaust ducts 13c, d are situated after the axial exhaust ducts 13a, b adjacent to the second endwall 6 of the casing 1. The radial exhaust ducts 13c, d have a spiral shape and are formed of two profiles 12c, d which in this case have an extent of about three quarters of a turn, i.e. about 270°. The two profiles 12c, d constitute wall surfaces of the two spiral exhaust ducts 13c, d, the respective inlets and outlets of which are offset 180° from one another. The exhaust gases are led radially inwards, via a third portion 17c of the passage, which comprises said parallel radial exhaust ducts 13c, d, from a first portion 17a of the passage which is situated externally to the pipe 4, to a second portion 17b of the passage, which is situated internally to the pipe 4. The space in the passage downstream from the radial exhaust ducts 13c, d internal to the pipe 4 constitutes a second space. The combination of the axial exhaust ducts 13a, b and the radial exhaust ducts 13c, d results in a very long exhaust line without the shape of the converter device having to be elongate. The converter device can therefore be made very compact and occupy little space while at the same time having very good sonic damping properties.

A burner 14 may, if necessary, be arranged in the vicinity of the inlet 2 to the converter device. The purpose of the burner 14 is to heat the exhaust gases to a temperature such that soot particles can burn in the particle filter 7. Soot particles normally ignite at a temperature of about 600°C. In most cases, however, it is difficult to guarantee such a high exhaust temperature even with a high performance burner 14. The ignition temperature of the soot particles has therefore usually to be lowered. This may be done by converting to nitrogen dioxide NO₂ the various types of nitrogen oxides NOₓ arising. There are in principle two methods for doing so. According to a first method known as CRT (Continuous Regeneration Trap) a separate oxidising catalytic cleaner is arranged for this purpose before the particle filter 7 in the direction of flow of the exhaust gases. In this case the soot particles ignite at about 225°C in the particle filter 7. According to a second method known as CSF (Catalytic Soot Filter) the particle filter 7 is lined with a suitable lining material so that oxidising catalysis from NOₓ to NO₂ takes place directly on the surface of the particle filter 7. In this case the soot particles ignite at about 250°C. It is also possible to use various additive substances in the fuel to achieve a lowered ignition temperature of about 350°C in a conventional particle filter 7. In cases where a catalytic cleaner 10 based on the SCR (Selective Catalytic Reduction) principle is used, injection devices 15 are arranged at the periphery of the converter 1 to add an ammonia carrier substance, e.g. in the form of urea. When the ammonia carrier has been added, it needs to be hydrolysed and mixed in properly in order to optimise the performance of the catalytic cleaner 10 as regards reducing to nitrogen gas and water the ammonia and nitrogen oxides content of the exhaust gases passing through. With the elongate axial exhaust ducts 13a, b and the radial exhaust ducts 13c, d, this is no problem.

The exhaust gases are led into the converter device through the inlet 2. Fig. 4 depicts a section C-C through the converter device at the inlet 2. The exhaust gases are led from the inlet 2 to the first portion 17a of the passage, which comprises a substantially annular space extending externally about the pipe 4. The annular space of the first portion 17a affords relatively little flow resistance to the inflow of exhaust gases and imparts to the exhaust gases a substantially even distribution before they are led in an axial direction external to the pipe 4 towards the particle filter 7. Before the exhaust gases reach the particle filter 7, they are heated, if necessary, by the burner 14 to a temperature such as to guarantee ignition and combustion in the particle filter 7 of soot particles contained in the exhaust gases. The exhaust gases are led in the first direction 8 through the elongate ducts of the particle filter 7. The stop surfaces 9 arranged at suitable points along the elongate ducts in the particle filter 7 divert the exhaust gases into adjacent elongate ducts. Depending on the regenerating system and the temperature, the soot particles which are caught at this stage in the particle filter 7 ignite and burn. The exhaust gases are thus caused to deviate a short distance sideways but mainly flow in the first direction 8 along a substantially straight line through the particle filter 7. The exhaust gases flowing out from the particle filter 7 will in principle be clear of soot particles.

The exhaust gases flowing out from the particle filter 7 have a substance in the form of an ammonia carrier added to them by the injection devices 15 before they reach the module M which comprises said axial exhaust ducts 13a, b and said radial exhaust ducts 13c, d. In the module M, the exhaust gases are led initially into the helical exhaust ducts 13a, b formed by the profiles 12a, b. The respective inlets to the two helical exhaust ducts 13a, b are offset 180° from one another so as to cause substantially even distribution of the exhaust gases between the two exhaust ducts 13a, b. The exhaust gases led through the helical exhaust ducts 13a, b travel a considerably longer distance than they would in a substantially rectilinear axial flow external to the pipe 4. Thereafter the exhaust gases are led into the spiral exhaust ducts 13c, d formed by the profiles 12c, d. The respective inlets to the two exhaust ducts 13c, d are offset 180° from one another so as to cause substantially even distribution of exhaust gases between the two exhaust ducts 13c, d. The exhaust gases led successively radially inwards through the spiral exhaust ducts 13a, b of the third portion 17c travel a considerably longer distance than they would in a substantially rectilinear radial flow between the first portion 17a situated externally to the pipe 4 and the second portion 17b situated internally to the pipe 4. The axial helical exhaust ducts 13a, b and the radial spiral exhaust ducts 13c, d constitute an elongate exhaust line which connects two spaces of the passage, resulting in effective sonic damping of low-frequency noise from the diesel engine. The elongate exhaust ducts 13a, b, c, d also provide a necessary mixing distance for the ammonia carrier so that the latter becomes distributed substantially evenly in the exhaust gases. The exhaust gases passing through the helical exhaust ducts 13a, b and the spiral exhaust ducts 13c, d have relatively gentle changes of direction imparted to them, thereby reducing the flow resistance. In the spiral exhaust ducts 13a, b the result is a flow in a plane which is substantially perpendicular to the first direction of flow 8 and the second direction of flow 11 of the exhaust gases. The exhaust gases flowing out from the spiral paths are led into the pipe 4. The exhaust gases flowing out from the exhaust ducts 13a, b are accommodated in a centrally situated space in the module M before being led into the pipe 4 towards the catalytic cleaner 10. When the exhaust gases flowing inside the pipe 4 reach the catalytic cleaner 10 they flow into the latter's elongate ducts which enable the exhaust gases to flow in the second direction of flow 11 which is parallel with and in the opposite direction to the first direction of flow 8. In the catalytic cleaner 10, the nitrogen oxides and ammonia content of the exhaust gases is reduced to nitrogen gas and water. Thereafter the exhaust gases substantially clear of soot particles and nitrogen oxides flow out through the outlet 3. The outlet 3 has a well-rounded decreasing shape which connects the pipe 4 to a narrower pipe of the exhaust system (the narrower pipe 4 is not depicted in the drawings). The shape of the outlet 3 means that here again the exhaust gases are subject to very little flow resistance.

The exhaust ducts 13a, b, c, d are thus comprised within a detachable separate module M which is easy to fit and remove. The endwall 6 and the helical exhaust ducts 13a, b and the spiral exhaust ducts 13c, d can thus be fitted as a single unit. Such modules M may be manufactured in various versions and sizes. Modules M comprising exhaust ducts which differ in number, length and cross-sectional area can therefore be fitted in the converter device, depending inter alia on the type and size of combustion engine. Fitting the module may be by means of clamping straps 19.

The invention is in no way limited to the embodiment described but may be varied freely within the scopes of the claims. For example, the exhaust ducts need not necessarily have a helical or spiral extent but may have a curved extent of substantially any desired shape such as to cause the exhaust gases to travel a longer distance than in the case of a substantially rectilinear axial and radial extent. The exhaust gases may alternatively be led in an opposite direction so that they first flow through the pipe 4 on the inside before being led radially outwards via the radial exhaust ducts 13c, d and the axial exhaust ducts 13a, b to a final flow external to the pipe 4. In such a case, the particle filter 7 is arranged internally to the pipe 4 and the catalytic cleaner 10 externally to the pipe 4. The casing 1, the exhaust cleaning components 7, 10 and the pipe 4 need not necessarily have a circular cross-sectional shape but may have substantially any desired shape. The pipe 4 likewise need not be arranged centrally inside the casing 1 but may have substantially any desired positioning.

## Claims

1. A converter device adapted to being arranged in an exhaust system for a combustion engine, wherein the converter device comprises an outer casing (1), a tubular body (4) enclosed by said casing (1), and a passage for leading exhaust gases through the converter device wherein said passage comprises a first portion (17a) situated externally about the tubular body (4), a second portion (17b) situated internally to the tubular body (4), and a third portion (17c) which carries a flow of exhaust gases in a radial direction between the first portion (17a) and the second portion (17b), said first portion (17a) comprises at least one axial exhaust duct (13a, b) constituting a lengthened flow route for exhaust gases as compared with a substantially rectilinear axial flow externally about the tubular body (4), and **characterised in that** the third portion (17c) comprises at least one radial exhaust duct (13c, d) constituting a lengthened flow route for exhaust gases as compared with a substantially rectilinear radial flow between the first portion (17a) and the second portion (17b).

2. A converter device according to claim 1, **characterised in that** the axial exhaust duct (13a, b) and the radial exhaust duct (13c, d) are situated in such a way as to connect a first space and a second space of the passage.

3. A converter device according to claim 1 or 2, **characterised in that** the axial exhaust duct (13a, b) has a helical extent and/or that the radial exhaust duct (13c, d) has a spiral extent.

4. A converter device according to claim 3, **characterised in that** the axial exhaust duct (13a, b) and/or the radial exhaust duct (13c, d) turn/turns through an angle of from 180° to 1080°.

5. A converter device according to any one of the foregoing claims, **characterised in that** the axial exhaust duct (13a, b) and/or the radial exhaust duct (13c, d) have/has at least one section with a varying cross-sectional area.

6. A converter device according to any one of claims 3-5, **characterised in that** the axial exhaust duct (13a, b) and/or the radial exhaust duct (13c, d) are/is formed of at least one elongate profile element (12a, b, c, d).

7. A converter device according to any one of the foregoing claims, **characterised in that** the axial exhaust duct (13a, b) and/or the radial exhaust duct (13c, d) comprise/comprises *n* parallel exhaust ducts (13a, b, c, d) formed of *n* profile elements (12a, b, c, d) which are offset 360°/*n* from one another.

8. A converter device according to claim 7, **characterised in that** *n* is greater than or equal to 2.

9. A converter device according to any one of the foregoing claims, **characterised in that** the exhaust gases are caused to be led through the passage in a direction such that they first flow through the first portion (17a) before flowing through the second portion (17b).

10. A converter device according to any one of the foregoing claims, **characterised in that** the axial exhaust duct (13a, b) and the radial exhaust duct (13c, d) are comprised within a detachable separate module (M).

## Patentansprüche

1. Umwandelvorrichtung, die dazu ausgebildet ist, in einem Abgassystem für einen Verbrennungsmotor angeordnet zu werden, wobei die Umwandelvorrichtung ein äußeres Gehäuse (1), einen rohrförmigen Körper (4), der von dem Gehäuse (1) umgeben ist, und einen Durchgang zum Führen von Abgasen durch die Umwandelvorrichtung aufweist, wobei der Durchgang einen ersten Abschnitt (17a), der außerhalb des rohrförmigen Körpers (4) um diesen herum angeordnet ist, einen zweiten Abschnitt (17b), der innerhalb des rohrförmigen Körpers (4) angeordnet ist, und einen dritten Abschnitt (17c) umfasst, der einen Abgasstrom in radialer Richtung zwischen dem ersten Abschnitt (17a) und dem zweiten Abschnitt (17b) führt, wobei der erste Abschnitt (17a) wenigstens einen axialen Abgaskanal (13a, b) umfasst, der einen Strömungsweg für Abgase bildet, welcher im Vergleich zu einem im Wesentlichen geradlinigen axialen Strom außerhalb um den rohrförmigen Körper (4) herum verlängert ist,
**dadurch gekennzeichnet, dass** der dritte Abschnitt (17c) wenigstens einen radialen Abgaskanal (13c, d) umfasst, der einen Strömungsweg für Abgase bildet, der im Vergleich zu einem im Wesentlichen geradlinigen radialen Strom zwischen dem ersten Abschnitt (17a) und dem zweiten Abschnitt (17b) verlängert ist.

2. Umwandelvorrichtung nach Anspruch 1, **dadurch gekennzeichnet, dass** der axiale Abgaskanal (13a, b) und der radiale Abgaskanal (13c, d) derart angeordnet sind, dass sie einen ersten Raum und einen zweiten Raum des Durchgangs miteinander verbinden.

3. Umwandelvorrichtung nach Anspruch 1 oder 2, **dadurch gekennzeichnet, dass** der axiale Abgaskanal (13a, b) eine helixförmige Erstreckung und/oder dass der radiale Abgaskanal (13c, d) eine spiralförmige Erstreckung aufweist/aufweisen.

4. Umwandelvorrichtung nach Anspruch 3, **dadurch gekennzeichnet, dass** der axiale Abgaskanal (13a, b) und/oder der radiale Abgaskanal (13c, d) sich über einen Winkel von 180° bis 1080° erstreckt/erstrecken.

5. Umwandelvorrichtung nach einem der vorangehenden Ansprüche, **dadurch gekennzeichnet, dass** der axiale Abgaskanal (13a, b) und/oder der radiale Abgaskanal (13c, d) wenigstens einen Abschnitt mit variierender Querschnittsfläche aufweist/aufweisen.

6. Umwandelvorrichtung nach einem der Ansprüche 3 bis 5, **dadurch gekennzeichnet, dass** der axiale Abgaskanal (13a, b) und/oder der radiale Abgaskanal (13c, d) aus wenigstens einem länglichen Profilelement (12a, b, c, d) gebildet ist/sind.

7. Umwandelvorrichtung nach einem der vorangehenden Ansprüche, **dadurch gekennzeichnet, dass** der axiale Abgaskanal (13a, b) und/oder der radiale Abgaskanal (13c, d) *n* parallele Abgaskanäle (13a, b, c, d) umfasst/umfassen, die aus *n* Profilelementen (12a, b, c, d) gebildet sind, die um 360°/*n* zueinander versetzt sind.

8. Umwandelvorrichtung nach Anspruch 7, **dadurch gekennzeichnet, dass** *n* größer oder gleich 2 ist.

9. Umwandelvorrichtung nach einem der vorangehenden Ansprüche, **dadurch gekennzeichnet, dass** die Abgase dazu gebracht werden, durch den Kanal in einer Richtung geführt zu werden, so dass sie zunächst durch den ersten Abschnitt (17a) strömen, bevor sie durch den zweiten Abschnitt (17b) strömen.

10. Umwandelvorrichtung nach einem der vorangehenden Ansprüche, **dadurch gekennzeichnet, dass** der axiale Abgaskanal (13a, b) und der radiale Abgaskanal (13c, d) innerhalb eines abnehmbaren separaten Moduls (M) vorgesehen sind.

## Revendications

1. Dispositif convertisseur adapté pour être agencé dans un système d'échappement d'un moteur à combustion, dans lequel le dispositif convertisseur comprend un carter externe (1), un corps tubulaire (4) enfermé dans ledit carter (1), et un passage pour conduire les gaz d'échappement à travers le dispositif convertisseur, dans lequel ledit passage comprend une première portion (17a) située en externe autour du corps tubulaire (4), une seconde portion (17b) située en interne par rapport au corps tubulaire (4), et une troisième portion (17c) qui transporte un flux de gaz d'échappement dans une direction radiale entre la première portion (17a) et la seconde portion (17b), ladite première portion (17a) comprenant au moins une conduite d'échappement axiale (13a, b) constituant une trajectoire d'écoulement allongée pour les gaz d'échappement en comparaison avec l'écoulement axial sensiblement rectilinéaire en externe autour du corps tubulaire (4), **caractérisé en ce que** la troisième portion (17c) comprend au moins une conduite d'échappement radiale (13c, d) constituant une trajectoire d'écoulement allongée pour les gaz d'échappement en comparaison avec un écoulement radial sensiblement rectilinéaire entre la première portion (17a) et la seconde portion (17b).

2. Dispositif convertisseur selon la revendication 1, **caractérisé en ce que** la conduite d'échappement axiale (13a, b) et la conduite d'échappement radiale (13c, d) sont situées de façon à connecter un premier espace et un second espace du passage.

3. Dispositif convertisseur selon la revendication 1 ou 2, **caractérisé en ce que** la conduite d'échappement axiale (13a, b) s'étend en hélice et/ou en ce que la conduite d'échappement radiale (13c, d) s'étend en spirale.

4. Dispositif convertisseur selon la revendication 3, **caractérisé en ce que** la conduite d'échappement axiale (13a, b) et/ou la conduite d'échappement radiale (13c, d) tourne(nt) sur un angle compris entre 180° et 1080°.

5. Dispositif convertisseur selon l'une quelconque des revendications précédentes, **caractérisé en ce que** la conduite d'échappement axiale (13a, b) et/ou la conduite d'échappement radiale (13c, d) a (ont) au moins un segment qui présente une section transversale dont la superficie varie.

6. Dispositif convertisseur selon l'une quelconque des revendications 3 à 5, **caractérisé en ce que** la conduite d'échappement axiale (13a, b) et/ou la conduite d'échappement radiale (13c, d) est (sont) formée(s) d'au moins un élément profilé allongé (12a, b, c, d).

7. Dispositif convertisseur selon l'une quelconque des revendications précédentes, **caractérisé en ce que** la conduite d'échappement axiale (13a, b) et/ou la conduite d'échappement radiale (13c, d) comprend (comprennent) *n* conduites d'échappement parallèles (13a, b, c, d) formées de *n* éléments profilés (12a, b, c, d) qui sont décalés entre eux de 360°/*n*.

8. Dispositif convertisseur selon la revendication 7, **caractérisé en ce que** *n* est supérieur ou égal à 2.

9. Dispositif convertisseur selon l'une quelconque des revendications précédentes, **caractérisé en ce que** les gaz d'échappement sont forcés par le passage dans une direction telle qu'ils s'écoulent d'abord à travers la première portion (17a) avant de s'écouler à travers la seconde portion (1 7b).

10. Dispositif convertisseur selon l'une quelconque des revendications précédentes, **caractérisé en ce que** la conduite d'échappement axiale (13a, b) et la conduite d'échappement radiale (13c, d) sont comprises au sein d'un module séparé détachable (M).
